# EUROPEAN PATENT SPECIFICATION

(11) **EP 3 145 436 B1**
(45) Date of publication and mention of the grant of the patent: **02.10.2019**
(21) Application number: 14892834.4
(22) Date of filing: 26.11.2014
(51) Int. Cl.: A61C 1/08, A61C 5/00, A61C 13/00, A61C 9/00

(54) **NOVEL DENTAL SCANNER DEVICE AND SYSTEM AND METHODS OF USE**
NEUARTIGE DENTALE SCANNERVORRICHTUNG UND SYSTEM UND VERFAHREN ZUR VERWENDUNG
NOUVEAU DISPOSITIF DE SCANNER DENTAIRE ET SYSTÈME ET PROCÉDÉS D'UTILISATION

(30) Priority: 23.05.2014 US 201414286650; 15.08.2014 US 201462037822 P
(43) Date of publication of application: 29.03.2017
(73) Proprietor: APOLLO ORAL SCANNER, LLC, Miami FL 33130 (US)
(72) Inventor: FERNANDEZ PULIDO, Alfonso, E-28224 Madrid (ES); DEPABLOS GARCIA, David, E-28224 Madrid (ES)
(74) Representative: Heinze, Ekkehard
(86) International application number: PCT/US2014/067715
(87) International publication number: WO 2015/178962

(56) References cited:
- WO-A1-91/03980
- DE-A1- 4 204 327
- JP-A- 2011 152 411
- US-A- 3 382 781
- US-A- 3 971 954
- US-A- 3 971 954
- US-A- 4 575 805
- US-A1- 2002 055 082
- US-A1- 2009 079 993
- US-A1- 2011 212 420
- US-B1- 6 201 880
- US-B2- 7 494 338

## Description

### Background of the Invention

The subject invention relates to a scanner device for generating a three dimensional (3D) surface model of arbitrarily shaped objects, such as dental structures, preferably applicable for use in the field of stomatology, dentistry, or orthodontics, and particularly to dental prosthetics manufacturing. More specifically, the subject invention includes an intraoral 3D dental scanning device and methods for imaging and visualizing teeth or gingivae surfaces, including the conformation thereof. The present invention further concerns a novel scanner probe head, configured for optimal imaging for creating representative 3-D models from the images generated using a scanner device having an anchored probe which moves along X and Y-axes only, and does not move along the Z-axis.

Three-dimensional (3D) diagnostic and therapeutic modeling of teeth and gingivae have been traditionally obtained by mainstream techniques, such as using replicas obtained from alginate-impressed molds. Such replicas provide gingiva and tooth negative-image molds, which can later be converted into positive models, which may be scanned. However, these mainstream techniques pose problems and disadvantages which are manifold. These problems include: patient discomfort during the process of creating the mold, creation of imperfections and inaccuracies in the resulting mold, and the process can be slow and costly.

More recently, several state-of-the-art devices have been developed, e.g., panoramic dental X-rays, computerized dental tomography, and optical scanning devices, that attempt to solve the problems posed by mainstream techniques. Optical scanners are devices that can capture and record or store information from the surface of an object, and generate that information into an image.

The use of scanners to determine the surface contour of objects by non-contact optical methods has become increasingly important in many applications including the in vivo scanning of dental structures to create a 3D model. Typically, the 3D surface contour is formed from a cloud of points where the relative position of each point in the cloud represents an estimated position of the scanned object's surface at the given point.

Such optical scanning devices have been developed and made commercially available for the dental market, and have been described in the patent literature incorporating a variety of technologies and configurations. For example, certain European patents have been identified as describing scanning devices, such as: EP 0825837, entitled, "Modular intra-oral imaging system video camera," provides a hand-held video camera to capture images of the inner part of the mouth and an optically aligned sensor which converts the captured images into usable data; ES 2383220, entitled "Intraoral dental imaging sensor and X-ray system, using such sensor," describes an intraoral dental radiological system equipped with a mouth-insertable X-ray imaging sensor having an image-detection matrix to provide electronic signals, and a light source to receive the matrix-generated signals; and ES 2324658 (T3), entitled "Laser-digitalizing system for dental applications" describes a laser digitizer that has a light source with collimation optics to generate a collimated light beam, a scanner optically coupled with the light source.

Optical scanning devices have also been patented or published in the United States, for example, in U.S. Pat. No. 6,648,640, entitled "INTERACTIVE ORTHODONTIC CARE SYSTEM BASED ON INTRA-ORAL SCANNING OF TEETH"; U.S. Pat. No. 4,837,732, entitled "Method and Apparatus for the Three-Dimensional Registration and Display of Prepared Teeth"; U.S. Pat. No. 4,575,805, entitled "Method And Apparatus For The Fabrication Of Custom-Shaped Implants"; U.S. Pat. No. 5,372,502, entitled "Optical Probe and Method for the Three-Dimensional Surveying of Teeth"; U.S. Pat. No. 5,027,281, entitled "Method and Apparatus for Scanning and Recording of Coordinates Describing Three Dimensional Objects of Complex and Unique Geometry"; U.S. Pat. No. 5,431,562, entitled "Method and Apparatus for Designing and Forming a Custom Orthodontic Appliance and for the Straightening of Teeth therewith"; U.S. Pat. No. 6,592,371, entitled "Method and System for Imaging and Modeling a Three Dimensional Structure"; and U.S. Pat. No. 7,004,754, entitled "Automatic Crown and Gingiva Detection from Three-Dimensional Virtual Model of Teeth"; as well as U.S. Publication No. 2006/0154198, entitled "3D Dental Scanner."

These systems and devices previously described all have various disadvantages in their design and use in practice. Commercially available 3D scanner systems have been developed for the dental market typically employ a handheld (by the operator), wand-type scanner in communication with a central (and typically large and bulky) computer/power source. In these systems, the operator moves the scanner over the area to be scanned and collects a series of image frames. The intraoral cavity represents a significant challenge for accurate in vivo 3D imaging of the surface of teeth and tissue. The ability to accurately measure the center of a scanning line is affected by the translucency of teeth, the variety of other reflecting surfaces (amalgam fillings, metal crowns, gum tissue, etc.) and the obscuration due to adjacent surfaces. Further, linear or rotational motion adds to error accumulation and the variation in size and curvature of human jaws makes a "one size fits all" scanner problematic.

In addition to the inaccuracies that can be introduced, these state-of-the-art devices and systems can be inconvenient to use, and inconvenient for the patient. In some cases, a technician must manually operate the handheld wand using a toothbrush-like motion and the results can depend on the dexterity and skill of the operator. Systems based on photographs taken by the various devices where software interprets and interpolates the photographic information into a final 3D image, can be time-consuming.

Thus, what is needed in the art is a 3D scanning device, and system, which can address and overcome disadvantages and limitations of the devices and systems which have been previously described and marketed.

The subject invention addresses and overcomes certain disadvantages of prior systems and devices by providing a completely integrated, unitary device, which is portable, and can be easily held by the patient during use. The inventors have now discovered that a novel scanner probe head configuration can provide additional advantages, including but not limited to imaging of arbitrarily shaped objects, such as teeth and other structure in an upper or lower dental arch, when the scanner arm movement is fixed along a transverse plane (X and Y axes), and there is substantially no movement of the scanner arm in the sagittal plane direction (Z-axis).

A wide variety of scanner probe heads for use with 3-D imaging devices are known. For example, scanner probes and probe heads therefor are described in the above-mentioned patents, as well as US Patent Nos. 6,965,690; 7,153,135; 7,286,954; 7,312,924; and 7,494,338. WO 91/03980 discloses an intra-oral scanning device with a scanning probe on an extending arm, which arm is coupled at one end to a mobility mechanism. Although these prior known probe heads can be adaptable to the scanner device described in WO 2014/083211 and its progeny, the inventors have discovered that the prior art lacks, and there is a need for, a scanner probe head which is configured to optimally image arbitrarily shaped objects, such as teeth and other structure in an upper or lower dental arch, when the scanner arm is fixed along a transverse plane.

Thus, the invention provides a dental scanning device without certain disadvantages or inconveniences of the previously known state-of-the-art systems, capturing accurate 3D images using a fixed-reference system. No handheld wand is required, and no manual operation of the scanning probe is necessary by a technician or a patient, as the device and system is fully automated.

### Summary of the Invention

The subject invention comprises a 3D scanning device and system especially useful in the field of stomatology, dentistry, or orthodontics, and particularly to dental prosthetics manufacturing. The device and system of the invention is particularly applicable for imaging the surface characteristics of an object, including arbitrarily shaped objects, such as dental structures (e.g., teeth, gingiva, and the like), for generating a three-dimensional (3D) image and surface model of the object or objects. More specifically, the subject invention includes an intraoral 3D dental scanning device and method for imaging and visualizing teeth or gingivae surfaces, including the conformation thereof, useful for generating dental models and the manufacture of dental prosthetics therefrom.

A device of the subject invention comprises, in a preferred embodiment, a first component, which is a housing body that is preferably capable of being held in the hand or hands of a person. By the phrase, "capable of being held in the hand or hands of a person," is meant that the housing body is configured having a size and weight that can be readily held in one or both hands by a user or scanning subject during a scanning procedure. The device further comprises a second component, which is a patient-contacting fixture, such as a mouthpiece or bite fixture, which provides a fixed reference point for the scanner and scanner probe relative to the scan target.

The housing body of the device contains or encases a chassis providing a mobility mechanism for moving, guiding, or directing a scanning probe coupled to the mobility mechanism. By providing a mobility mechanism for operating the movement of the scanning probe in a fixed or pre-programmed pattern relative to mouthpiece or bite fixture, the device and its use can advantageously provide a fixed reference point for the scanning probe, obviating the need for a hand-manipulated wand.

The scanning probe comprises an arm or stem coupled to the mobility mechanism at a first proximal end of the arm, and having a scanning head positioned at an opposite, distal end of the arm. The scanning head comprises an imaging source, such as an infrared or light-emitting diode (LED) or laser light source, and can comprise a sensor, transducer or receiver for capturing an image generated by the imaging source when projected onto the surface of the object, such as dental structures. The scanning head can further include a camera or a plurality of cameras.

The subject invention further concerns a scanner probe head configured to provide optimal imaging when using a scanner probe which moves in an anterior/posterior direction (X-axis) and right/left direction (Y-axis), relative to the anatomical transverse plane between the upper and lower dental arches, and is fixed in relation to, and does not deviate from, the transverse plane, i.e., does not move in the superior/inferior direction (along the Z-axis).

The scanner probe head comprises a chassis having a base, and at least two extension arms or "wings," each holding a scanning light or radiation source in substantially diametrically opposed positions relative to one another. The scanner probe head of the invention further comprises at least two additional extension arms or wings for holding and positioning a camera to capture the image from each light or radiation source. The captured image is then processed by computer to generate the 3D image.

In a preferred embodiment, more than one extension arm or wing of the scanner probe head can be used for simultaneously illuminating and capturing an image from a front, top or bottom, and rear face of a scan target. In one preferred embodiment, the scanner probe head of the invention comprises at least four, and more preferably eight, extension arms or wings.

In a four-arm or four-wing configuration, two extension arms holding light or radiation sources are diametrically opposed to one another, at 180 degrees apart, and are positioned at an angle from the base from about 30 degrees to about less than 90 degrees to illuminate a front face and a back face of the target object, The other two arms each hold a camera for capturing the image from each respective light or radiation source. Preferably, the camera extension arms are positioned at an angle away from the light or radiation source extension arms. For example, the camera extension arms are typically positioned at least 10 degrees and less than 90 degrees away from the light or radiation source extension arm to optimally capture the image reflected from the light or radiation source. The camera extension arms are also angled from the base at about 30 to less than 90 degrees.

In an embodiment comprising an eight-arm configuration, four extension arms each hold at least one light or radiation source and four extension arms each hold at least one camera. The light or radiation sources are preferably positioned equidistant and at 90 degrees from one another, and the cameras are positioned between each light or radiation source, also equidistant and at about 90 degrees from one another. Thus, each extension arm is about 45 degrees from one another, alternatingly holding a light source, camera, light source, camera, and so on.

It would be understood by a person of ordinary skill in the 3D scanner art that the basic measurement principle behind collecting point position data for these optical methods is triangulation. In triangulation, given one or more triangles with the baseline of each triangle composed of two optical centers and the vertex of each triangle being a target object surface, the range from the target object surface to the optical centers can be determined based on the optical center separation and the angle from the optical centers to the target object surface. If one knows the coordinate position of the optical centers in a given coordinate reference frame, such as for example a Cartesian X,Y,Z reference frame, then the relative X, Y, Z coordinate position of the point on the target surface can be computed in the same reference frame.

Triangulation methods can be divided into passive triangulation and active triangulation. Passive triangulation (also known as stereo analysis) typically utilizes ambient light and the optical centers along the baseline of the triangle are cameras. In contrast, active triangulation typically uses a single camera as one optical center of the triangle along the baseline and, in place of a second camera at the other optical center, active triangulation uses a source of controlled illumination (also known as structured light).

Stereo analysis is based upon identifying surface features in one camera image frame that are also observed in one or more image frames taken at different camera view positions with respect to the target surface. The relative positions of the identified features within each image frame are dependent on the range of each of the surface features from the camera. By observing the surface from two or more camera positions the relative position of the surface features may be computed.

Stereo analysis while conceptually simple is not widely used because of the difficulty in obtaining correspondence between features observed in multiple camera images. The surface contour of objects with well-defined edges and corners, such as blocks, may be rather easy to measure using stereo analysis, but objects with smoothly varying surfaces, such as skin or tooth surfaces, with few easily identifiable points to key on, present a significant challenge for the stereo analysis approach.

Active triangulation, or structured light methods, overcomes the stereo correspondence issue by projecting known patterns of light onto an object to measure its shape. The simplest structured light pattern is simply a spot of light, typically produced by a laser. The geometry of the setup between the light projector and the position of the camera observing the spot of light reflected from the target object's surface enables the calculation of the relative range of the point on which the light spot falls by trigonometry. Other light projection patterns such as a stripe or two-dimensional patterns such as a grid of light dots can be used to decrease the required time to capture the images of the target surface.

The measurement resolution of the target objects' surface features using structured lighting methods is a direct function of the fineness of the light pattern used and the resolution of the camera used to observe the reflected light. The overall accuracy of a 3D laser triangulation scanning system is based primarily upon its ability to meet two objectives: 1) accurately measure the center of the illumination light reflected from the target surface and 2) accurately measure the position of the illumination source and the camera at each of the positions used by the scanner to acquire an image.

To achieve the second objective, the scanner probe head of the subject invention further comprises a slotted cover, serving as or substituting for, a collimator placed over the light or radiation source to create a fine linear pattern. The size of the probe head for use in an intraoral scanner described in WO 2014/083211 and its progeny does not permit the use of a conventional lens for focusing or narrowing the emitted light. The narrow band of emitted light from opposite sides of the chassis covers, illuminates, and therefore scans the entire surface of the linear section of the target object.

In use, a scanner probe head of the subject invention can be fitted onto a scanning end of a probe extension arm described in WO 2014/083211 and its progeny, and the scan performed. More specifically, a scanner probe head of the invention comprising four extension arms can be used to perform a scan in the X-axis direction, then rotated 90 degrees to scan in the Y-axis direction, or vice versa.

In a preferred embodiment, comprising eight extension arms (four light sources), two opposing light sources are used only when scanning in the X-axis direction, and the other two opposing light sources are used when scanning in the Y-axis direction. The two opposing light sources not used at any particular scanning direction can be automatically switched off when the scanner probe changes from Y-axis or X-axis scanning. Similarly, the cameras are configured so that only those needed to capture the image of the light source in use are used.

Thus the scanning head comprises one or more optical imaging components, for generating an imaging source and capturing or storing the generated image, as described and well understood in the art. Advantageously, the imaging source does not require a collimator for focusing the imaging light source and can be provided with or without a collimator. Accordingly, a device of the subject invention can comprise a collimator or can be collimator-free.

The housing body of the device, which is preferably formed as a molded plastic shell, is provided to enclose or completely encase both the mobility mechanism and at least a portion of the scanning probe (such as the probe arm) when the device is "at rest," i.e., when in an "off" position or not in scanning mode. The housing body comprises an opening whereby, during its operation, the scanning head of the scanning probe, and typically a portion of the arm of the scanning probe, extends outside the housing body to carry out an imaging process or scan, when "on" or in scanning mode.

The scanning probe can be partially or completely contained within the housing body when a scan is not being performed, and can be moved outward by the mobility mechanism to project outside the housing body for intraoral scanning of dental structures (e.g., teeth, gingiva, and the like) in a patient.

In a typical embodiment of the invention, one end of the probe arm is coupled to the mobility mechanism within the housing body, wherein said probe arm extends outside the housing body, and the probe head is also outside the housing body. The probe head is protected outside the housing body by the mouthpiece which chambers or encloses the probe head. It is contemplated that the entire scanning probe can be withdrawn inside the housing body for full protection of the scanning probe, including the probe head, when in an "off" position or not performing a scanning procedure.

Advantageously, the subject device can be portable, and completely self-contained and hand-held during a scanning operation, meaning that the device does not require a separate hand-held probe wand cabled or wirelessly connected to an image processor. Hand-held probe wands, and operation thereof by hand, are well known in the industry, but can introduce extraneous linear and rotational motion during hand operation of the wand, which can result in image artefact and increased time for image processing. These disadvantages of a separate, hand-held probe wand can be due to, for example, a requirement for the image processor to continuously or frequently re-calculate reference positioning, which can increase total time of the scanning procedure.

By contrast, the subject device does not include or require a hand-held wand, i.e., the device is wand-less or wand-free, whereby the scanning probe has a fixed reference position at all stages of the scanning procedure. The scanning probe of the subject invention does not require manipulation by an operator at any time. The movement of the scanning probe of the subject device can preferably be driven by a mobility mechanism operated by a motor, such as an electric or electronic stepping motor. When engaged or turned "on", the motor-driven mobility mechanism moves the scanning probe automatically in a pre-programmed scanning pattern without further manipulation by an operator.

In accordance with the subject invention, the device is unitary, whereby the entire imaging unit, including the scanning probe, is controlled and operated by the device, itself, while the mouthpiece is held in a fixed position in the mouth of the subject, thereby providing a fixed reference position for the scanning probe. Thus, the scanning probe, itself, is not hand-held or otherwise manipulated by hand; rather the entire unit is held in a steady or fixed position during the scanning procedure, and the scanning probe, which is integral with the unitary device, is directed by the mobility mechanism to move in a controlled or pre-programmed pattern to carry out a scan. Such pre-programmed pattern is typically an arc pattern, corresponding to the dental arc of a patient or subject.

The housing body, in a preferred embodiment, is preferably ergonomically designed having a size and shape, such as rounded or contoured edges, for being easily held by a patient during use. The housing body is preferably formed by plastic or other light material, molded or otherwise shaped to form a shell structure having a hollow chamber therein. The chamber formed within the housing body shell, which contains the mobility mechanism coupled to, and for movement of, the scanning probe, further encases the electronics and mechanical positioning apparatus for controlling the movement and operation of the scanning probe. For example, the mobility mechanism for moving the scanning probe comprises a chassis, onto which the positioning apparatus is provided, including the operational control mechanism for movement of the probe.

The positioning apparatus can include an extension arm coupled to the stem or arm of the scanning probe, to extend and retract the scanning probe to and from within the chamber of the housing body. For ease of reference, the movement of the scanning probe is said to move outward, in a distal direction from the center of the housing body, and inward, in a medial or proximal direction toward the center of the housing body. The chassis can further have coupled thereto a lateral rod or gear system providing for lateral (horizontal or side-to-side) movement of the scanning probe.

These mechanisms and apparatus for movement and positioning of the scanning probe, i.e., for extending/retracting and for lateral movement of the scanning probe are well understood within the mechanical arts. Preferably, the scanning probe is moved only in the in/out and side-to-side directions, and does not move vertically, retaining a constant horizontal plane, within the confines of the mouthpiece, during operation.

The mechanical positioning mechanism can be controlled by electronics, such as an electronically driven motor, which can direct and control the movement and position of the scanning probe. A preferred embodiment of the device is powered by a motor driven by electricity or by battery-stored electricity, wherein a battery or other power source can also be contained within the housing body. Alternatively, the electric motor can be connected to an external electrical power source by a cable or electrical cord.

The electronics directing the movement of the scanning probe can be controlled by computer software, provided and stored within or without the housing body, and the software can provide a menu of functions, such as ON/OFF, SCAN, or other desired functions, operated by one or more switches or buttons positioned on the outer top or bottom face of the housing body. Preferably, the device comprises a set of switches or buttons on each of the top and bottom face of the device housing.

Providing two sets of switches or buttons, one on each of the top and bottom face of the housing body, allows for the device to be operated in dual positions, i.e., upward-facing position and downward-facing position. By "upward-facing" is meant that the probe head and light source are positioned to face upward, toward the top teeth during a dental scan; by "bottom-facing" is meant that the probe head and light source are positioned to face downward, toward the bottom teeth during a dental scan. Therefore, for conducting a complete scan of the top and bottom teeth of a patient, the device can advantageously be positioned in a first direction, e.g., upwardly, to scan the upper teeth, then turned approximately 180° and positioned in the other direction, e.g., downwardly, to scan the bottom teeth. A housing body having switches or buttons on both the top and bottom face can facilitate operation of the device in either upward or downward facing position.

The housing body can further comprise a connector or port for engaging a cable for communication with a computer or image processor for processing or storing information received from the sensor, transducer or receiver of the scanning probe. Alternatively, the device can comprise a wireless transmitter/receiver for wirelessly communicating with a computer, whereby the wireless transmitter/receiver can be provided integral with the device or housed within the housing body.

Positioning of the device and scanning probe for optimal scanning results is facilitated by the patient-contacting fixture, such as a mouthpiece or "bite fixture", which engages the device and provides a protective cover for the scanning probe. Although the patient-contacting fixture is described herein as a bite fixture which is held in the mouth of the patient during a scanning procedure, it is understood that the patient contacting fixture serves to facilitate providing a fixed reference point for the scanner probe head, and therefore can be an extra-oral fixture. In other words, the configuration of the patient contacting fixture can be such that it comes into contact with the patient outside the oral cavity, e.g., contacting the face, chin, or chest area of the patient such that the device is generally immobilized or held steady relative to the patient during the scanning procedure.

For convenience of reference, however, the patient contacting fixture is described herein as a mouthpiece or bite fixture which is held in the oral cavity of the patient during the scanning procedure. Preferably configured for being easily and comfortably held in the patient's mouth during a scanning procedure, the mouthpiece or bite fixture can comprise a generally flat rectangular housing having side walls and top and bottom walls forming and surrounding a generally flat, rectangular hollow chamber.

The top and bottom walls provide a surface for the patient to bite down onto during the scanning procedure, advantageously providing a fixed position of the teeth during a scanning procedure. This fixed position of the teeth on the mouthpiece provides for and facilitates a fixed reference point relative to the scanning probe, which moves in a pre-programmed pattern during a scanning procedure.

The mouthpiece of the device can be configured to engage, and preferably be separable from, the opening provided in the housing body. The mouthpiece is provided as a platform having at least top and bottom faces spaced apart from one another, onto which the patient or scanning subject can bite down onto during a scanning procedure. The top and bottom face are preferably substantially solid planar panels, connected to, but spaced apart from, one another by substantially planar side walls which, together, form or bound the substantially rectangular hollow chamber.

The patient-contacting fixture is preferably a bite fixture or mouthpiece which can advantageously serve to facilitate positioning and stabilization of the "bite" by the patient or scanning subject, so that the teeth or dental arch being scanned are held in a fixed position during the scanning procedure. The mouthpiece can further serve to protect the scanning probe as it extends into the oral cavity during operation of the device during a scanning procedure.

At least one top or bottom face of the mouthpiece comprises a transparent, or sufficiently translucent window, to allow the scanning light source to penetrate therethrough, and to allow return of light information to the sensor, transducer, camera, or receiver on the scanning probe head to perform a scanning procedure. Generally, the transparent or translucent window is a panel sized to correspond or conform to the entire dental arch being scanned. Different shapes and configurations of the transparent or translucent window are contemplated and are not critical to the invention so long as the configuration provides for scanning the targeted teeth of the patient or subject.

As stated, the front end of the mouthpiece, facing toward the patient and within the oral cavity during operation or use, can be closed or open, but is preferably closed by a front wall. The opposite end of the front end or wall is open to communicate with the hollow chamber of the housing body. The hollow chamber formed within the mouthpiece receives the scanning probe and provides an area for the scanning probe to enter, extend, retract, and move laterally and perform a scan.

Various shapes and configurations can be used for the mouthpiece so long as it provides for positioning in the mouth, a bite platform, and allows for movement of the scanning probe therein. A preferred embodiment can comprise a shape conforming generally to the shape of the dental arch. Positioning guides, such as printed, formed or grooved indicia, or contours can be provided on the mouthpiece, but a generally flat wall comprising the scanning widow is preferred in order to reduce optical artefact during the scanning procedure.

In a preferred embodiment, however, the generally rectangular mouthpiece can include a generally "V"-shaped or "U"-shaped open area which provides room for the patient's tongue to move more freely, facilitating breathing and reducing the likelihood of inducing a feeling of choking or a "gag-response" by the patient.

As mentioned, it is preferred that the mouthpiece is separable from the housing body. A separable mouthpiece can facilitate its use under sanitary conditions, either allowing removal of the mouthpiece from the housing body to perform cleaning/sterilization procedures between uses or, when made from cost-effective material, such as an inexpensive plastic, can be provided as a disposable, one-time-use-only mouthpiece that can be affixed to the scanning device for each use, and discarded thereafter.

It would be understood that the mouthpiece can be formed as an integral part of or unitary with the housing body. While an integral mouthpiece formed as part of the device can include a removable cover or sleeve provided for each patient for maintaining sanitary conditions, this integral mouthpiece embodiment does not readily provide for different sizes of mouthpieces to accommodate different sizes of mouths, such as adult-sized and child-sized mouths. Accordingly, a preferred embodiment comprises a separate and removable mouthpiece, which is not formed permanently integral with the housing body.

An embodiment of the invention comprising a separable or removable mouthpiece can provide the capability of at least two or more sizes of a mouthpiece. For example, one size of mouthpiece can be provided for adult mouths, and another, smaller size of mouthpiece can be provided for children. Intermediate or larger or smaller sizes can also be provided. Each size of mouthpiece has the same configuration, i.e., is the same size, at its end engaging the housing body, so that multiple sizes of mouthpieces can fit and engage with a single housing body of a device. In one preferred embodiment, the mouthpiece comprises at least one flange or annular ridge around its circumference so that it provides a positional "stop" or indicator when properly engaging with the housing body. This flange or annular ridge can further serve as a positional indicator for proper placement of the mouth onto the mouthpiece during a scanning procedure.

The device, as described can be included as a system for scanning dental structures, wherein the system comprises the components of the device as described, and can further include external, in-line devices which are used in conjunction with the scanning device for providing a dental scan. External devices can receive, process, or utilize the information provided by the dental scan. For example, a system of the subject invention can comprise a printer for printing a photograph from the scan information, a milling machine for constructing a prosthetic dental structure (e.g., a crown or denture) from the scan, or a 3D printer for printing a prosthetic dental structure.

Methods of using a scanning device of the subject invention are also within the scope of the invention. For example, a method of use can include the steps of (a) providing a scanning device as described and (b) performing a scanning procedure on a subject or patient. The method can further comprise an additional step (c) of printing, milling, or 3D printing a dental structure using the information obtained from the scanning procedure.

Advantageously, the scanning device of the subject invention can provide a method for scanning teeth and gingivae without the need for imaging powder or imaging gel applied or administered to the teeth or gingivae of the patient or subject. Thus the subject method can be a powder-free or gel-free scanning procedure, which can save time, cost, and reduce discomfort to the patient or subject.

### Brief Description of the Drawings

FIG. 1 shows an embodiment of a device according to the subject invention, illustrating a top or bottom view of the housing body and mouthpiece in an engaged configuration;
FIG. 2 is an exploded top or bottom perspective view of an embodiment according to the subject invention, illustrating the chassis and scanning probe components housed within the housing body.
FIGs. 3A-3C show various views of the mouthpiece wherein:

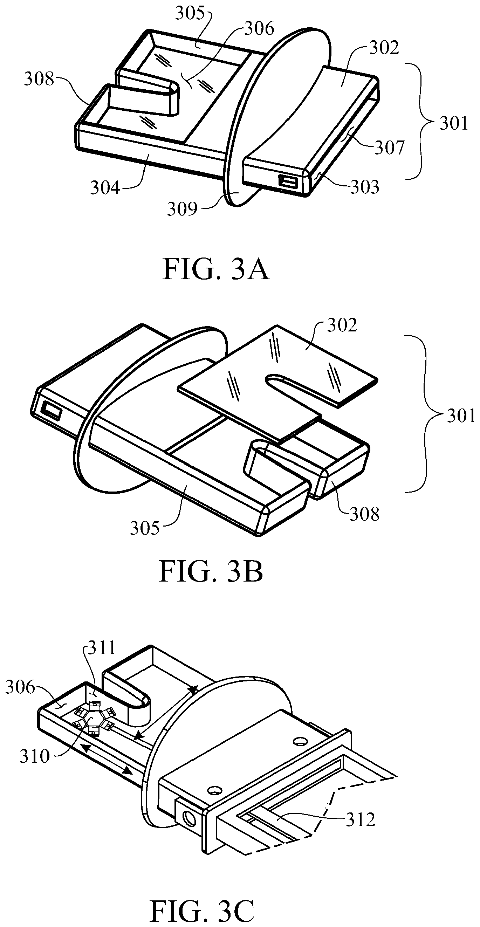

   FIG. 3A is a perspective view of an embodiment of a mouthpiece for the subject device, illustrating the transparent or substantially translucent top or bottom panel thereof, and a circumferential flange positioning stop;
   FIG. 3B is a perspective view of an embodiment of a mouthpiece for the subject device, showing an exploded view of the transparent or substantially translucent top or bottom face of the mouthpiece;
   FIG. 3C is a perspective view of an embodiment of a mouthpiece for the subject device, illustrating the scanning probe within the chamber formed by the mouthpiece.

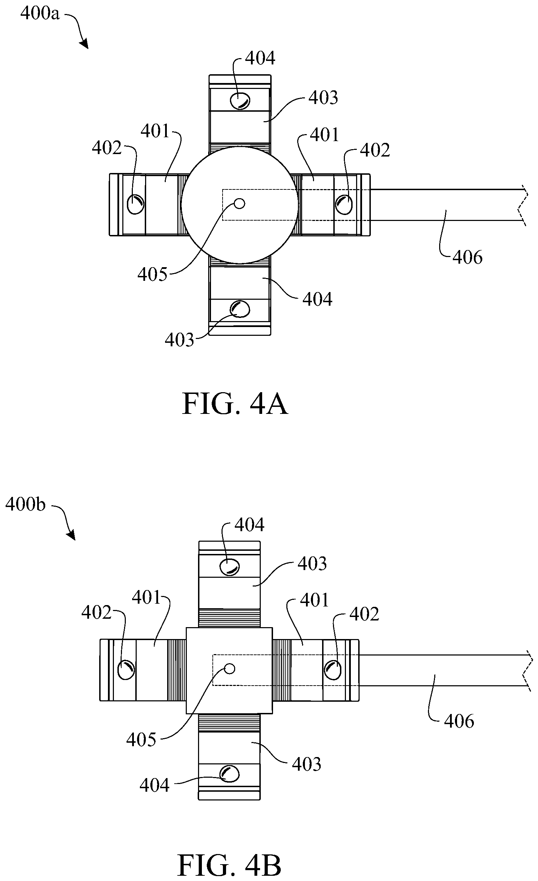

FIG. 4A is a top plan view of an embodiment of a scanner probe head having a circular base and comprising four extension arms: two transmitter extension arms each holding a transmitter, e.g., a light source, for transmitting light or radiation toward ant onto a scan target and two receiver extension arms each holding a receiver, e.g., a camera, for receiving light or radiation generated by the transmitter and reflected off the scan target.
FIG. 4B is a top plan view of an embodiment of a scanner probe head having a rectangular (square or diamond-shaped) base and comprising four extension arms: two transmitter extension arms each holding a transmitter, e.g., a light source, for transmitting light or radiation toward ant onto a scan target and two receiver extension arms each holding a receiver, e.g., a camera, for receiving light or radiation generated by the transmitter and reflected off the scan target.

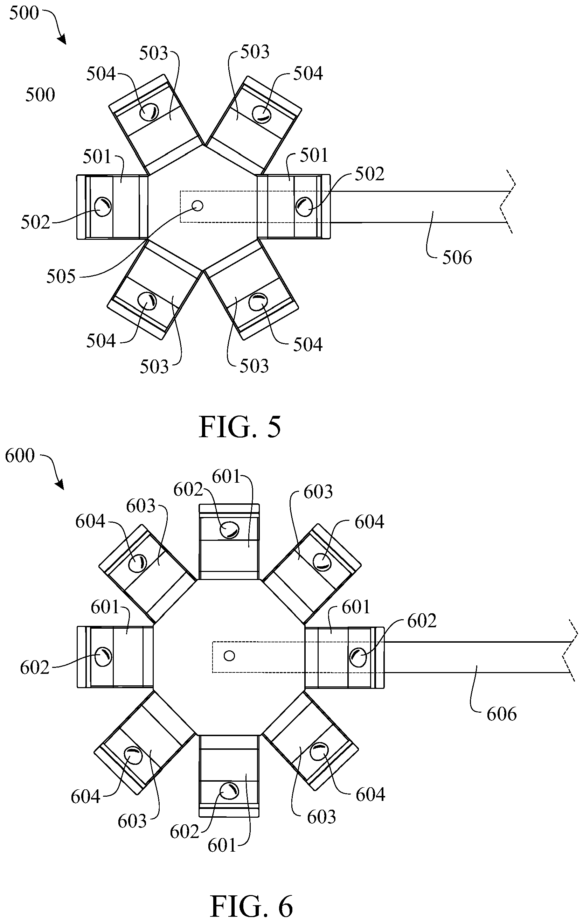

FIG. 5 is a top plan view of an embodiment of a scanner probe head comprising six extension arms: two transmitter extension arms and four receiver extension arms.
FIG. 6 is a top plan view of an embodiment of a scanner probe head comprising eight extension arms: four transmitter extension arms and four receiver extension arms.

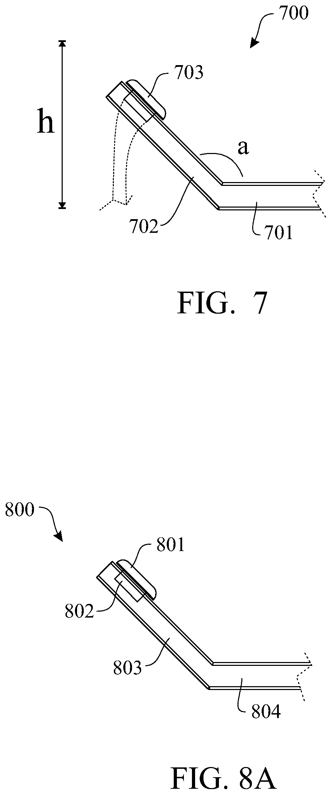

FIG. 7 is a cross-sectional side view of an embodiment of a scanner probe head of the invention showing an appropriate angle and height of the extension arm as it relates to the base.

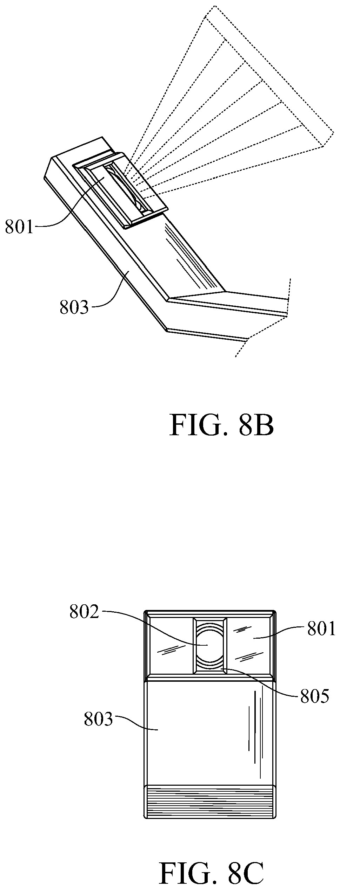

FIGs. 8A-8C show a slotted collimator positioned anterior to the transmitter. FIG. 8A shows a side view of a slotted collimator positioned anterior to the transmitter; FIG. 8B shows a front plan view of the slotted collimator illustrating the slit or slot formed therein to direct the light or radiation from the transmitter; and FIG. 8C shows a perspective view of the slotted collimator illustrating the width of the light emitted from the transmitter.

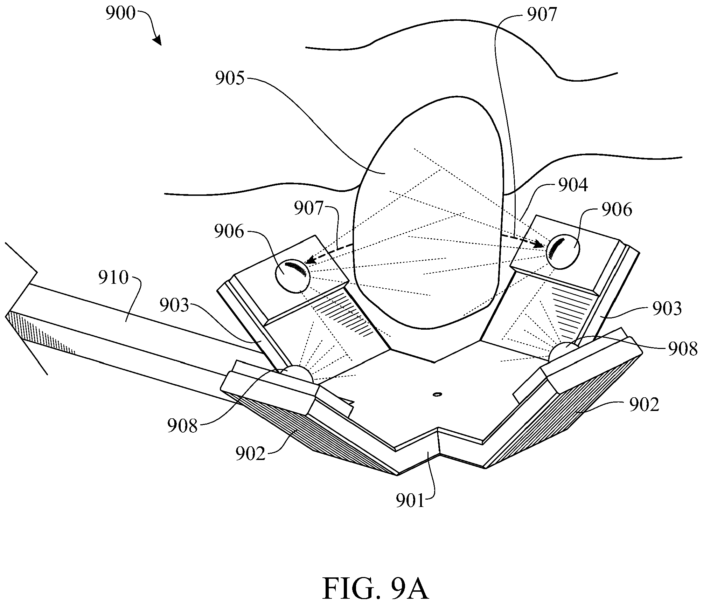

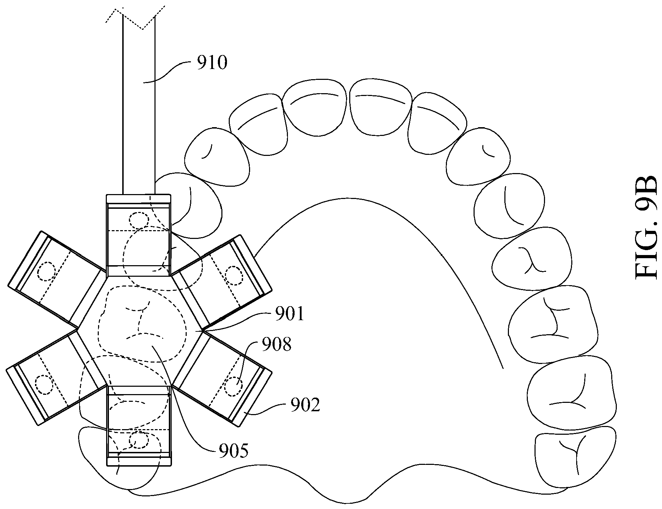

FIGs. 9A and 9B show an embodiment of the scanner head probe of the invention in use. FIG. 9A shows a scanner probe head in use in side, cross-sectional view of a tooth; and FIG. 9B shows a perspective view of a scanner probe head in use in relation to the dental arch.

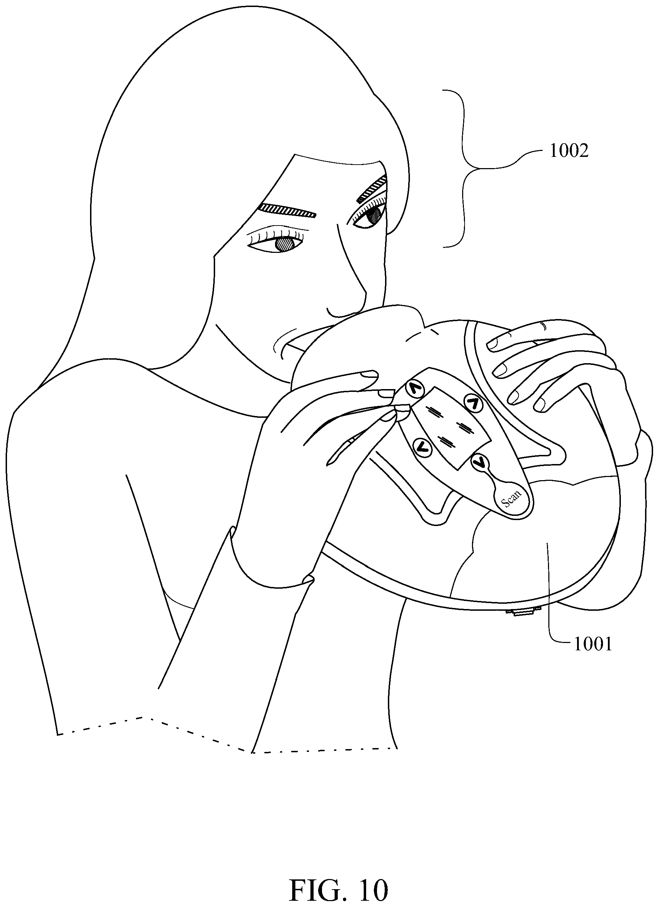

FIG. 10 illustrates an embodiment of the device of the invention, hand-held and in use by a scanning subject during a scanning procedure;

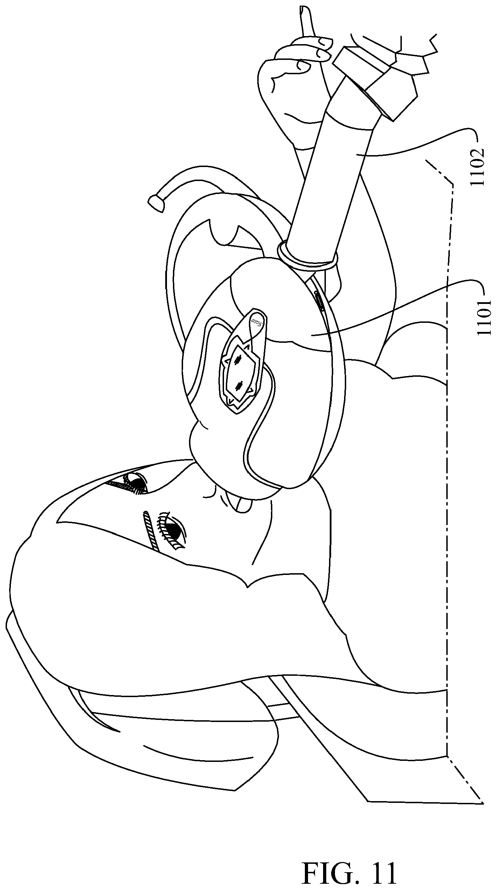

FIG. 11 illustrates another embodiment of a device of the invention, illustrating a mounted embodiment, which can be affixed to a base.

### Detailed Description of the Invention

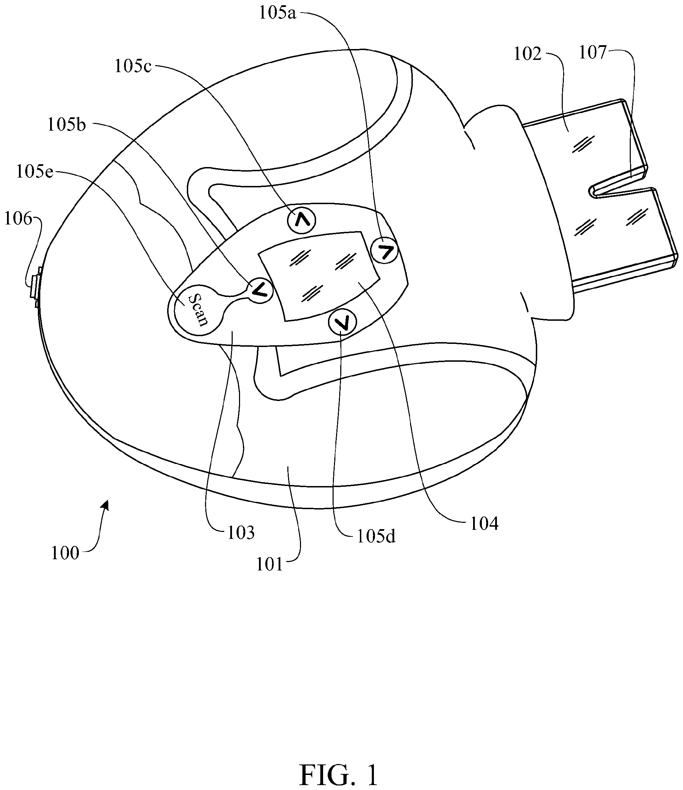

To describe and illustrate the components of a device of the invention, reference is made to the accompanying drawings, whereby: FIG. 1 shows an embodiment of a device 100 according to the subject invention, illustrating a top or bottom view of the housing body 101 and mouthpiece 102 in an engaged configuration. Reference is made to "either" the top face or bottom face of the device because, in a preferred embodiment, the device is symmetrical wherein the top and bottom faces are identical or at least substantially identical so that the device can be operated in an identical or substantially identical manner when facing upward or downward.

During operation, the device is positioned, for example, upwardly to perform a scan of an upper dental arch, and the device may then be rotated approximately 180° to face downward for scanning, for example, the lower dental arch. In both instances, a control panel 103 provided on each top and bottom face, provides for easy access and manipulation of the control panel on the "upper" face (facing upward at the time of operation).

Thus, as shown here, the outer (top or bottom) face comprises a control panel 103 integral with the face wherein the control panel comprises a menu screen 104 for viewing a menu of available operations or functions on menu screen 104. The operation of the device can be controlled by manipulating one or more buttons or set of buttons provided as part of the control panel. Here, an embodiment is shown having a set of five (5) buttons, specifically, buttons 105a, 105b, 105c, 105d, and 105e, for controlling the menu and function or operation of the device.

Buttons 105a and 105b, for example, can manipulate a scrolling function of a menu display, allowing the user to scroll up or down on a displayed menu page; buttons 105c and 105d, can control the selection of different pages of the menu, for example, button 105c providing the operation to return to a previous page of the menu, and button 105d providing an operation of moving forward to a next page of the offered menu. Button 105e can be used for initiating the "scan" operation, and can further perform "on/off" functions or the like.

It would be readily understood that a great variety of styles and designs can be incorporated into the control panel, and the particular style or design is not critical, so long as the device provides user-friendly options for functionality and operation of the device.

The housing body can be molded or otherwise fabricated using plastic or other appropriate lightweight material, and can be formed as a single unit, or can be formed as sections, example upper and lower halves, which are fitted together to form the single housing body unit.

The patient contacting fixture, or mouthpiece 102 is shown engaged with an opening (not shown) formed in one end of housing body 101. The embodiment of mouthpiece 102 as shown here, comprises a transparent panel forming a top or bottom face of the mouthpiece. In addition, mouthpiece 102 illustrates a substantially "V"- or "U"-shaped cut-out area 107 formed therein. This is a preferred configuration for a mouthpiece of the invention, conforming generally to the shape of the dental arch, and further advantageously minimizing obstruction of a patient's airway, and gag-response, while permitting the scanning probe to reach the full dental arch during a scanning procedure.

At an end of the housing body, opposite the mouthpiece, is a connector port 106, for coupling the device, via a cable, to a computer, image processor, milling machine, printer (e.g., a 3D printer), or the like for transferring information received by the scanning probe to an external device. This connector can alternatively provide for wireless connection, i.e., be configured as a wireless transmitter, for wirelessly transferring image information to an external device. It would be understood that the location of the connector can be at any position on or within the housing body, so long as it fits within the function and design of the device.

Alternatively, this connector port 107 can be configured as part of a male/female coupling means for coupling the device to a base or stand, providing for hands-free use of the device during a scanning procedure (see, for example, FIG. 11, and accompanying description, below).

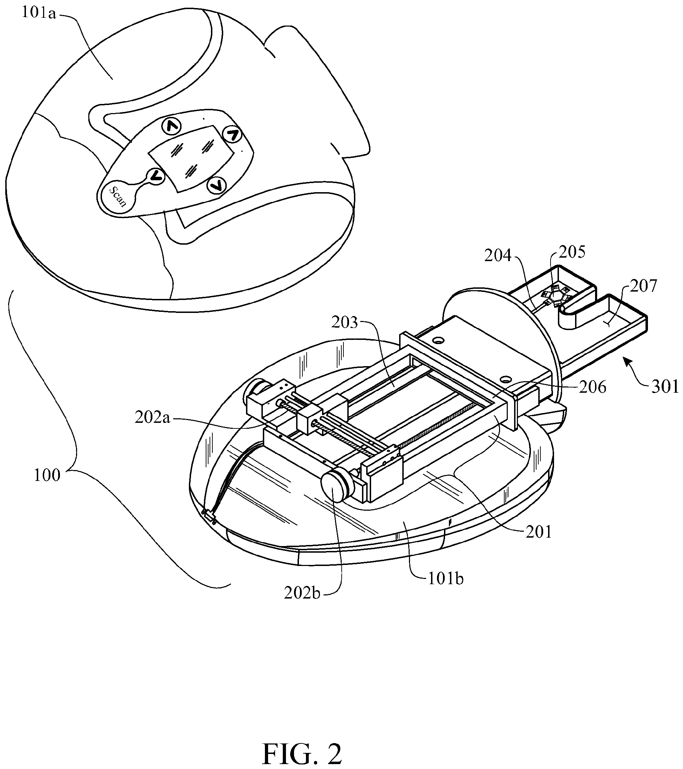

FIG. 2 is an exploded top or bottom perspective view of an embodiment of scanning device 100 according to the subject invention, illustrating the housing body 101 formed from top half 101a and bottom half 101b. This view further illustrates a chassis 201 provided for holding a mobility mechanism coupled to and providing movement for a scanning probe 203 comprising a an arm or stem 204 and a scanning head 205.

The mobility mechanism comprises one or more stabilizing bars or rods and a rotating screw mechanism for lateral movement of the scanning probe 202a and one or more stabilizing bars or rods and rotating screw mechanism 202b for distal/proximal (in/out) movement of the scanning probe.

Further shown in FIG. 2 is opening 206 formed or provided at one end of the housing body, such that the mouthpiece can engage the housing body, and the scanning probe can extend from within the housing body into the chamber 207 of the mouthpiece.

FIGs. 3A-3C show various views of one embodiment of the mouthpiece component of the device of the invention wherein: in FIG. 3A is illustrated mouthpiece 301 comprising a top face 302 and bottom face 303, spaced apart from one another by side walls 304 and 305 forming a hollow chamber 306 therein.

Open end 307 engages with the housing body of the device, and provides for communication with the chamber of the housing body and for receiving a scanning probe (not shown) in the formed chamber of the mouthpiece. An intraoral end of the mouthpiece can be open or closed, but is preferably closed by front (intraoral) wall 308.

In the embodiment shown, top face 305 comprises, at least in part, a clear or transparent plastic material for allowing a scanning source, such as infrared or laser light, to pass therethrough without interference or distortion of the light source, or the information returning to a sensor, receiver, or transducer provided in or on the scanning probe head.

Also illustrated in FIG. 3A is a circumferential (or annular, if substantially circular or ovoid shaped) flange or ridge 309 which can provide a positional "stop" for engaging the mouthpiece to the housing body. The flange or ridge 309 can also function as a "stop" for the lips or mouth of the subject.

In FIG. 3B, the mouthpiece 301 of FIG 3A is shown in an exploded view, illustrating the clear or transparent top face 302 of mouthpiece 301, and showing front (intraoral) wall 308.

FIG. 3C provides illustration of scanning probe 310 comprising a scanning head 311 inside the mouthpiece chamber 306, coupled to an arm or stem portion 312 extending from within the housing body. The scanning probe 310 can move distally/proximally (in/out) and laterally in the directions depicted by the arrows. The scanning probe head can comprise one or more imaging sources, such as a light source for generating the image. In one preferred embodiment, the imaging source can comprise a plurality of light sources, e.g., LED laser light. The scanning probe head can preferably comprise at least one light source, more preferably about four to about ten light sources, and typically about six to about eight light sources. These plurality of light sources are well understood in the art to be configured to communicate together to generate a single 3-dimensional image.

The scanner probe head can advantageously be configured, for example, as illustrated in FIGs. 4-9, to optimize the scanning process,. More particularly, a scanner probe head configured as described and shown can advantageously provide an optimal three-dimensional (3D) image of a scan target, including a scan target having a random shape, as is the case in intraoral scanning of a dental arch and components thereof.

A probe head of the invention can be provided for use in connection with any compatible 3D scanner, such as a hand-held wand-type scanner, but is especially applicable to a scanner device having a moving extension arm which positions the probe head along a linear or arced path during performance of a scan. More specifically, a scanner probe head of the invention is particularly useful for its application with an intraoral scanner having a moving extension arm in accordance with WO 2014/083211 and its progeny, wherein the extension arm automatically moves linearly in the anterior/posterior (Y-axis) direction and linearly in the right/left (X-axis) direction when performing a scan. In addition, the subject scanner probe head is advantageously adapted for use with a scanner having a bite fixture as, for example, described in WO 2014/083211 and its progeny.

A scanner probe head of the invention preferably comprises a generally flat base which engages or affixes to the scanner extension arm of a scanning device, and a plurality of extension arms for holding and positioning transmitters for transmitting light or radiation to the scan target and receivers for receiving the light or radiation reflected from the scan target.

The extension arms are preferably positioned in a spaced-apart configuration around the circumference or outer edge of the base, and extending at an angle relative to the horizontal plane of that base. The base can be circular or ovoid, or can be square, rectangular, or a polygon. Preferably the base has a shape wherein the external angles equal 360 degrees. The angle of the transmitter and receiver extension arms relative to the horizontal plane of the base is not critical, but a preferred angle ranges from about 10 degrees to about 75 degrees, more preferably about 30 degrees to about 60 degrees, and most preferably about 45 degrees.

A preferred embodiment of a scanner probe head of the invention comprises at least two transmitters, e.g., light or radiation emitters, positioned diametrically opposed to one another in relation to the base so that the front and back of the target are scanned simultaneously during a scan. Therefore, the transmitter extension arms are preferably positioned 180 degrees from one another along the outer edge or circumference of the base. Receivers, e.g., cameras, and receiver extension arms are positioned at an optimal angle to receive the reflected light or radiation. The receiver extension arms are therefore positioned at an angle of about 10 degrees to about 80 degrees from a transmitter/transmitter extension arm, preferably about 30 degrees to about 60 degrees from a transmitter/transmitter extension arm, and more preferably about 45 degrees from a transmitter/transmitter extension arm.

Preferably, the base comprises at least one receiver extension arm associated with a transmitter/transmitter extension arm. More preferably, the base comprises at least two receiver extension arms with each transmitter/transmitter extension arm in order to provide stereo analysis of the image reflected from the scan target.

In one preferred embodiment, the scanner probe head of the invention comprises at least four transmitter extension arms, each for holding and positioning one of a total of four transmitters, e.g., a light or radiation source. Preferably, the transmitter extension arms are spaced apart equidistant around the outer edge or circumference of the base, or about 90 degrees from one another. In this embodiment, two diametrically opposed transmitters are used for scanning in one direction (e.g., scanning along the X-axis) and the other two transmitters are used for scanning in the other (e.g., Y-axis) direction. Receivers held by receiver extension arms are positioned between, and preferably equidistant from, the transmitters/transmitter extension arms and can be operated to optimize the scan performance according to which transmitters are used.

The scanner probe head of the invention can be shaped or molded to its configuration, and can comprise a polymeric material, e.g., plastic, can be fiberglass, metal or alloy, or any substantially rigid material capable of being formed or molded into the final shape. The probe head can be formed as a single unit or, for example in the case of a probe head comprising eight extension arms, can be formed by layering or fitting together two discrete but substantially identical four-extension armed probe heads, skewed to provide the appropriate angles for the transmitters and receivers.

In use with a scanner device described in WO 2014/083211 and its progeny having a moving extension arm which positions the probe head along a linear path during performance of a scan, and more specifically, having a moving extension arm that automatically moves linearly in the anterior/posterior (Y-axis) direction and linearly in the right/left (X-axis) direction when performing a scan, the scanner probe head comprising only two transmitters can be positioned to provide a scan 90 degrees relative to the direction of movement of the moving device extension arm. In other words, if the device extension arm moves in the X-axis direction, the transmitters are positioned to transmit light or radiation in the Y-axis direction. When the device extension arm changes direction, e.g., from the X-axis direction to the Y-axis direction, the probe head can be rotated 90 degrees to perform the scan 90 degrees relative to the changed direction of movement.

Preferably the scanner probe head is stationary, and does not rotate. Accordingly, the probe head can be provided with two sets of two diametrically opposed transmitters/transmitter extension arms (a total of four transmitters/transmitter extension arms). In this configuration, one set is, or two diametrically opposed transmitters positioned 90 degrees from the direction of the scan, are operated during a scan in one (e.g., X-axis) direction, and the other two diametrically transmitters are operated during the scan in the other (e.g., Y-axis) direction. The corresponding receivers for receiving reflected light or radiation form the transmitters in operation can be selectively operated to coincide with the operation of the transmitters.

Turning now to the drawings, FIG. 4A is a top plan view of a circular-based embodiment of a scanner probe head 400a comprising four extension arms; two transmitter extension arms 401 each holding a transmitter 402, e.g., a light source, for transmitting light or radiation toward ant onto a scan target, and two receiver extension arms 403 each holding a receiver 404, e.g., a camera, for receiving light or radiation generated by the transmitter and reflected off the scan target. The scanner probe head 400a is shown affixed to a scanner extension arm 406, which can extend toward the central area of the probe head as shown partially in phantom. The probe head 401a can be affixed to the scanner extension arm, for example adhered thereto by use of an adhesive, by solder or welding, or can include a separate means for affixing the probe head to the scanner extension arm. For example, the probe head can include an aperture 405 for receiving a tack, brad, or screw which engages the probe head and the underlying extension arm for affixing one to the other.

FIG. 4B is a top view of a rectangular-, or square-based embodiment of a scanner probe head 400b comprising four extension arms; two transmitter extension arms 401 each holding a transmitter 402, e.g., a light source, for transmitting light or radiation toward ant onto a scan target, and two receiver extension arms 403 each holding a receiver 404, e.g., a camera, for receiving light or radiation generated by the transmitter and reflected off the scan target. The scanner probe head 400a is shown affixed to a scanner extension arm 406, which can extend toward the central area of the probe head as shown in phantom. The probe head 401b can be affixed to the scanner extension arm, for example, adhered thereto by use of an adhesive, by solder or welding, or can include a separate means for affixing the probe head to the scanner extension arm. For example, the probe head can include an aperture 405 for receiving a tack, brad, or screw which engages the probe head and the underlying extension arm for affixing one to the other.

FIG. 5 is a top plan view of an embodiment of a scanner probe head 500 comprising six extension arms; two transmitter extension arms 501 each holding a transmitter 502, e.g., a light source, for transmitting light or radiation toward and onto a scan target, and four receiver extension arms 503 each holding a receiver 504, e.g., a camera, for receiving light or radiation generated by the transmitter and reflected off the scan target. The scanner probe head 500 is shown affixed to a scanner extension arm 506, which can extend toward the central area of the probe head as shown in phantom. The probe head 500 can be affixed to the scanner extension arm, for example, adhered thereto by use of an adhesive, by solder or welding, or can include a separate means for affixing the probe head to the scanner extension arm. For example, the probe head can include an aperture 505 for receiving a tack, brad, or screw which engages the probe head and the underlying extension arm for affixing one to the other.

FIG. 6 is a top plan view of an embodiment of a scanner probe head 600 comprising eight extension arms; four transmitter extension arms 601 each holding a transmitter 602, e.g., a light source, for transmitting light or radiation toward and onto a scan target and four receiver extension arms 1603 each holding a receiver 604, e.g., a camera, for receiving light or radiation generated by the transmitters and reflected off the scan target. The probe head 600 can be affixed to the scanner extension arm 606, for example, adhered thereto by use of an adhesive, by solder or welding, or can include a separate means for affixing the probe head to the scanner extension arm. For example, the probe head can include an aperture 605 for receiving a tack, brad, or screw which engages the probe head and the underlying extension arm for affixing one to the other.

FIG. 7 is a side, cross-sectional partial view of an embodiment of a scanner probe head 700 of the invention showing base 701 and extension arm 702 extending at an appropriate angle *ϑ* relative to the horizontal base 701, and height h from base 701. The height is not critical but is preferred to be provided so that the probe head moves within a bite fixture used in connection with a scanner device comprising a bite fixture. Typically, the height h is between about 7 mm and about 9 mm. More preferably, the height h is between about 6 mm and about 8 mm, and most preferably about 7 mm. Transmitter or receiver 703, can be disposed toward the distal end of extension arm 702, and is shown as wiredly connected (wire connection shown in phantom) to a power source and/or processor. It would be understood that the transmitter or receiver can be wirelessly connected to a power source or processor.

In a scanner device having limited space for fitting or affixing additional components to a probe head, the capability to add a lens for focusing the path of light or radiation can be restricted. Accordingly, in one preferred embodiment of the invention as illustrated in FIGs. 8A-8C, probe head 800 can further comprise a slotted cover, providing a slot or slit for directing the emitted light or radiation in a narrow linear path toward the scan target. FIGs. 8A-8C show a slotted cover or collimator positioned anterior to the transmitter. FIG. 8A shows a side cross-sectional view of a slotted cover or collimator 801 positioned anterior to the transmitter 802 disposed on transmitter extension arm 803, which extends from base 804 of probe head 800.

FIG. 8B shows a front plan view of an probe head extension arm 803 comprising a slotted or slit collimator 801 illustrating the slit 805 formed therein to direct the light or radiation from the transmitter 802. FIG. 8C shows a perspective view of the slotted collimator 801 on transmitter extension arm 803 illustrating the width w of the light emitted from the transmitter. The width of the light emitted through slotted collimator of the invention is preferably less than about 0.05 mm, more preferably between about 0.02 mm and about 0.05 mm. A most preferred width for emitted light from a slotted collimator is about 0.03 mm.

FIGs. 9A and 9B illustrate an embodiment of the scanner head probe of the invention in use. FIG. 9A shows a side cross-sectional view of a scanner probe head 900 having base 901 and transmitter extension arms 902 holding and positioning transmitters 908 and receiver extension arms 903 holding and positioning receivers 906. In use, transmitters 908 emit light or radiation 904 toward scan target 905 (e.g., a tooth and surrounding tissue) and said emitted light or radiation is reflected back to receivers 906, in a direction illustrated by dotted arrows 907.

FIG. 9B further illustrates a scanner probe head in use in relation to the dental arch. Specifically shown is scanner probe head 900 comprising base 901 and diametrically opposed transmitters 908 on transmitter extension arms 902. Light or radiation, as illustrated, is emitted as a narrow band onto scan target onto 905, preferably at an angle of about 90 degrees (ranging from about 45 degrees to about 135 degrees) relative to the direction of movement (arrow) of the scanner extension arm 910.

The subject invention further includes a method of performing a three-dimensional scan of a target, preferably a target having a random shape such as a tooth or mouth structures in a dental arch, wherein the method comprises providing a scanning device having a moveable arm to which the scanner probe head is affixed, said scanner probe head comprising transmitter and receiver extension arms as described herein, and performing a three-dimensional scan. In a preferred embodiment, the method comprises use of a probe head as described herein, which is capable of use with a scanning device comprising a bite fixture, and more preferably comprises a method wherein the probe head fits and is moveable completely within a chamber formed by the bite fixture.

FIGs. 10 and 11 illustrate one embodiment of a device of the subject invention in use. Specifically, FIG. 10 shows a hand-held embodiment, wherein device 1001 is held by the subject 1002 during operation of the device to conduct a dental scanning procedure. FIG. 11 illustrates an alternative embodiment, mentioned above, whereby the device 1101 is coupled to or mounted on a mounting base or stand (not shown) having an extension arm 1102 for holding the device in position during a dental scanning procedure.

Having illustrated and described preferred embodiments of a device of the invention, said device can be used for performing a dental scanning procedure on a subject. In use, the device and mouthpiece are engaged together to form a single unit. The control panel is set to the desired function by the operator of the device and the mouthpiece, engaged with the device, is introduced into the oral cavity of the subject, positioned so that the mouthpiece contacts or positionally conforms to the entire dental arch. The subject preferably bites onto the mouthpiece for securing the position of the dental arch in relation to the mouthpiece and reducing the unnecessary movement of the device in relation to the dental arch during the scanning procedure.

The operator of the device then presses the "scan" function on the control panel to begin the scanning procedure, whereby the scanning probe automatically moves outward and extends to begin the scanning process at the desired location (e.g., tooth 1, 16, 17 or 32). The scanning probe head moves to sweep in at least two directions: one following the long axis of the scanning probe and its extending arm, and the other being lateral (perpendicular to the long axis of the scanning probe and its extending arm).

For the intraoral scanning, the scanning probe can comprise one or more of a detection sensor, laser sensors or similar devices integral with the scanning probe, or alternatively and preferably can comprise a camera to capture tooth-by-tooth sweep images from the dental arch and gingivae. These images are automatically generated as exact reproductions of the 3D images, as a result of their fixed and constant reference point in relation to the device or system.

The scanning probe moves in an arc to scan the entire dental arch of either the top or bottom teeth. If a full scan of all teeth is desired, the device can be removed from the mouth of the subject following a scan of a first (upper or lower) dental arch, rotated approximately 180°, and the process repeated for the other dental arch.

In a preferred embodiment, the vertical movement of the scanning probe is restricted, i.e., the probe only moves laterally or horizontally (side-to-side) and distally/proximally (out and in), but not vertically (up and down) or rotationally in relation to the mouth or the patient. Thus, the vertical, planar position of the scanning probe is maintained, whereby the scanning probe moves only in a single plane, and does not rise or fall, move up or down, or rotate or tilt during a scanning procedure.

This maintenance of a planar vertical position for the scanning probe provides a further advantage for the device, whereby the fixed position of the mouth on the mouthpiece and fixed reference point for the scanning probe is not affected by, and does not introduce additional motion artefact to the information generated by the scanning probe head. Vertical movement, tilting or rotational motion of the scanning probe can be a disadvantage of devices employing a hand-held wand comprising the scanning probe or scanning probe head.

Advantageously, the subject device is wand-less, i.e., it does not comprise a hand-held wand for hand-manipulation of the scanning probe. Instead, the scanning probe is manipulated for movement along a pre-set or pre-programmed arced pattern corresponding to the dental arch, using the chassis-mounted movement apparatus and mobility mechanism within the housing body, facilitating scanning using a fixed position reference point. Thus, the imaging processor is not required to relocate its reference position if the reference point is changed, such as can occur by use of a hand-held wand as the scanning probe. The device of the subject invention is therefore termed a "wand-less" or "wand-free" scanning device.

The subject device can be provided as a system, including a housing body comprising movement mechanism and scanning probe, and one or more separable mouthpiece. In addition, the system can comprise one or more connecting cable, mounting base and mounting arm, and one or more external device for receiving, processing or expressing information generated during the scanning procedure. For example, the system can include with a scanning device, a computer, image processor, milling machine, 3D printer or the like.

These components can also be provided in a carrying case which preferably has within the case, areas designated for each component, for easily and advantageously storing, carrying, and organizing the portable device and components therefor.

A method for performing a dental scan one or more teeth of a subject comprises the steps of (a) providing a scanning device having a fixed reference point for the scanning probe, as described and (b) operating the scanning probe to perform a scanning procedure on a subject or patient. The method can further comprise an added step of (c) printing, milling, or 3D-printing a dental structure using the information obtained from the scanning procedure. Moreover, the method can be carried out without use of a scanning powder or scanning gel; therefore the subject method is advantageously a "powder-free" or "gel-free" scanning method.

## Claims

1. A unitary, portable scanning device (100) for performing a dental scan on a subject, said device comprising:
a scanning probe (203; 310) comprising an extending arm (204; 312) coupled at one end to a mobility mechanism and at another end having a scanning probe head (205; 311) comprising a light source (402) for generating an image of an arbitrarily shaped structure, said mobility mechanism providing for extension/retraction and lateral movement of the scanning probe from a fixed reference point,
said mobility mechanism (202b) and at least a part of the extending arm of said scanning probe being encased within a housing body (101) formed as a hollow shell having a chamber for encasing at least a portion of a scanning probe and encasing a mobility mechanism for moving the scanning probe,
said housing body having an opening formed therein to receive and engage a patient contacting fixture for contacting the patient during a scanning procedure and thereby providing a fixed reference point for the scanner probe head,
wherein the patient contacting fixture is a mouthpiece (102; 301) positioned intraorally during a scanning procedure,
wherein the mouthpiece is a bite fixture having top and bottom faces (302, 303) separated by side walls (304, 305) to form a hollow bite fixture onto which the subject can bite down upon during a scanning procedure, said hollow mouthpiece having distal (308) and proximal ends (307), wherein the proximal end engages with the opening of the housing body and is open for communicating with the chamber (306) of the housing body, wherein said open proximal end of said mouthpiece receives and allows movement of the scanning probe during a scanning procedure.

2. The scanning device of claim 1, wherein the mobility mechanism comprises a chassis (201) holding positioning apparatus for moving the scanning probe (203; 310).

3. The scanning device of claim 1 wherein the scanning probe head (205; 311) comprises an infrared or light emitting diode or laser light source (402).

4. The device of claim 1 wherein the scanning probe head (205; 311) comprises a plurality of laser light sources (402).

5. A method of performing a dental scan, said method comprising the steps of
a. providing a scanning device of claim 1 and
b. performing a scanning procedure on a subject or patient.

6. The method of claim 5, said method further comprising the step of c. printing, milling, or 3D-printing a dental structure using the information obtained from the scanning procedure.

7. A system for carrying out a dental scan on a patient, said system comprising a portable scanning device (100) of claim 1, and an external device selected form a printer, a milling machine, and a 3D printer.

8. The system of claim 7 further comprising a connecting cable (106) for connecting said device (100) to an external printing, milling, or 3D printing device.

9. The system of claim 7 further comprising a scanning device housing body, a separate mouthpiece, an optional cable for connecting the device to an external printing, milling or 3D printing device, and a carrying case for containing said device, mouthpiece and optional cable.

## Patentansprüche

1. Einheitliche, tragbare Scanvorrichtung (100) zum Durchführen eines dentalen Scans an einem Patienten, wobei die Vorrichtung umfasst:
eine Scansonde (203; 310) mit einem ausziehbaren Arm (204; 312), der an einem Ende mit einem Mobilitätsmechanismus gekoppelt ist und an einem anderen Ende einen Scansondenkopf (205; 311) mit einer Lichtquelle (402) zum Erzeugen eines Bildes einer beliebig geformten Struktur aufweist, wobei der Mobilitätsmechanismus ein Ausfahren/Einziehen und eine seitliche Bewegung der Scansonde von einem festen Bezugspunkt aus ermöglicht,
wobei der Mobilitätsmechanismus (202b) und mindestens ein Tei des ausfahrbaren Arms der Scansonde in einem Gehäusekörper (101) eingeschlossen ist, der als hohles Gehäuse mit einer Kammer zum Umschließen mindestens eines Teils einer Scansonde und zum Umschließen eines Mobilitätsmechanismus zum Bewegen der Scansonde ausgebildet ist,
wobei der Gehäusekörper eine darin ausgebildete Öffnung aufweist, um eine Patienten-Kontaktvorrichtung zum Kontaktieren mit einem Patienten während eines Scanvorgangs aufzunehmen und in Eingriff zu bringen und dadurch einen festen Bezugspunkt für den Scansondenkopf bereitzustellen,
wobei die Patienten-Kontaktvorrichtung ein Mundstück ist (102; 301), das während eines Scanvorgangs intraoral positioniert ist,
wobei das Mundstück eine Bissvorrichtung mit einer Ober- und Unterseite (302, 303) ist, die durch Seitenwände (304, 305) getrennt sind, um eine hohle Bissvorrichtung zu bilden, auf die der Patient während eines Scanvorgangs aufbeißen kann, wobei das hohle Mundstück ein distales (308) und ein proximales Ende (307) aufweist, wobei das proximale Ende mit der Öffnung des Gehäusekörpers in Eingriff steht und offen ist für das Kontaktieren mit der Kammer (306) des Gehäusekörpers, wobei das offene proximale Ende des Mundstücks die Scansonde wähend eines Abtastvorgangs aufnimmt und eine Bewegung ermöglicht.

2. Scanvorrichtung nach Anspruch 1, wobei der Mobilitätsmechanismus eine Positionierungsvorrichtung für die Gehäusehalterung (201) zum Bewegen der Scansonde (203; 310) umfasst.

3. Scanvorrichtung nach Anspruch 1, wobei der Scansondenkopf (205; 311) eine Infrarot- oder lichtemittierende Diode oder Laserlichtquelle (402) aufweist.

4. Vorrichtung nach Anspruch 1, wobei der Scansondenkopf (205; 311) eine Vielzahl an Laserlichtquellen (402) aufweist.

5. Verfahren zum Durchführen eines dentalen Scans, wobei das Verfahren folgende Schritte umfasst:
a. Bereitstellen einer Scanvorrichtung nach Anspruch 1, und
b. Durchführen eines Scanvorgangs an einem Probanden bzw. einem Patienten.

6. Verfahren nach Anspruch 5, wobei das Verfahren ferner folgende Schritte umfasst:
c. Drucken, Fräsen oder 3D-Drucken einer Zahnstruktur unter Verwendung der Informationen, die durch das Scanverfahren gewonnen wurden.

7. System zum Durchführen eines dentalen Scans an einem Patienten, wobei das System eine tragbare Scanvorrichtung (100) nach Anspruch 1 aufweist, und eine externe Vorrichtung, die aus einem Drucker, einer Fräsmaschine und einem 3D-Drucker ausgewählt ist.

8. System nach Anspruch 7, ferner aufweisend ein Verbindungskabel (106) zum Verbinden der Vorrichtung (100) mit einer externen Druck-, Fräs- oder 3D-Druckvorrichtung.

9. System nach Anspruch 7, ferner umfassend einen Scanvorrichtungs-Gehäusekörper ein separates Mundstück, ein optionales Kabel zum Verbinden der Vorrichtung mit einer externen Druck-, Fräs- oder 3D-Druckvorrichtung und eine Transporttasche zur Aufnahme der Vorrichtung, des Mundstücks und des optionalen Kabels.

## Revendications

1. Dispositif de scannage portable unitaire (100) pour effectuer un scannage dentaire sur un sujet, ledit dispositif comprenant :
une sonde de scannage (203 ; 310) comprenant un bras en extension (200 ; 312) couplé à une extrémité un mécanisme de mobilité et ayant une autre extrémité une tête de sonde de scannage (205 ; 311) comprenant une source de lumière (402) pour générer une image d'une structure de forme arbitraire, ledit mécanisme de mobilité assurant un mouvement d'extension/rétraction et un mouvement latéral de la sonde de scannage depuis un point de référence fixe,
ledit mécanisme de mobilité (202b) et au moins une partie du bras en extension de ladite sonde de scannage étant enchâssés à l'intérieur d'un corps de boîtier (101) formé comme une coque creuse ayant une chambre pour enchâsser au moins une portion d'une sonde de scannage et pour enchâsser un mécanisme de mobilité destiné à déplacer la sonde de scannage,
ledit corps de boîtier ayant une ouverture formée à l'intérieur pour recevoir et engager un accessoire de contact de patient pour venir en contact avec le patient pendant une procédure de scannage et fournir ainsi un point de référence fixe pour la tête de sonde de scannage, dans lequel l'accessoire de contact de patient est un embout buccal (102 ; 301) positionné de manière intraorale pendant une procédure de scannage,
dans lequel l'embout buccal est un accessoire à mordre ayant une face supérieure et une face inférieure (62, 303) séparées par des parois latérales (300, 305) pour former un accessoire à mordre creux sur lequel le sujet peut mordre pendant une procédure de scannage, ledit embout buccal creux ayant une extrémité distale (308) et une extrémité proximale (307), dans lequel l'extrémité proximale engage l'ouverture du corps de boîtier et est ouverte pour communiquer avec la chambre (66) du corps de boîtier, et dans lequel ladite extrémité proximale ouverte dudit embout buccal reçoit la sonde de scannage et permet un mouvement de la sonde de scannage pendant une procédure de scannage.

2. Dispositif de scannage selon la revendication 1, dans lequel le mécanisme de mobilité comprend un châssis (201) qui maintient un appareil de positionnement pour déplacer la sonde de scannage (203 ; 310).

3. Dispositif de scannage selon la revendication 1, dans lequel la tête de sonde de scannage (205 ; 311) comprend une diode infrarouge ou une diode électroluminescente ou encore une source de lumière à laser (402).

4. Dispositif selon la revendication 1, dans lequel la tête de sonde de scannage (205 ; 311) comprend une pluralité de sources de lumière à laser (402).

5. Procédé pour effectuer un scannage dentaire, ledit procédé comprenant les étapes consistant à :
a) fournir un dispositif de scannage selon la revendication 1, et
b) effectuer une procédure de scannage sur un sujet ou un patient.

6. Procédé selon la revendication 5, ledit procédé comprenant les étapes consistant à
c) imprimer, usiner, ou imprimer en 3D une structure dentaire en utilisant les informations obtenues par la procédure de scannage.

7. Système pour effectuer un scannage dentaire sur un patient, ledit système comprenant un dispositif de scannage portable (100) selon la revendication 1, et un dispositif externe sélectionné parmi une imprimante, une machine d'usinage, et une imprimante 3D.

8. Système selon la revendication 7, comprenant en outre un câble de connexion (106) pour connecter ledit dispositif (100) à un dispositif externe d'impression, d'usinage, ou d'impression 3D.

9. Système selon la revendication 7, comprenant en outre un boîtier de logement pour dispositif de scannage, un embout buccal séparé, un câble optionnel pour connecter le dispositif à un dispositif externe d'impression, d'usinage ou d'impression 3D, et un coffret de transport pour contenir ledit dispositif, ledit embout buccal et ledit câble optionnel.
